# EUROPÄISCHE PATENTSCHRIFT

(11) **EP 1 322 560 B1**
(45) Veröffentlichungstag und Bekanntmachung des Hinweises auf die Patenterteilung: **26.10.2005**
(21) Anmeldenummer: 01982208.9
(22) Anmeldetag: 14.08.2001
(51) Int. Cl.: C03B 17/04

(54) **VORRICHTUNG ZUR HERSTELLUNG EINES GLASSTRANGES**
DEVICE FOR PRODUCING A GLASS ROD
DISPOSITIF POUR FABRIQUER UNE BARRE DE VERRE

(30) Priorität: 29.09.2000 DE 10048815
(43) Veröffentlichungstag der Anmeldung: 02.07.2003
(73) Patentinhaber: Schott AG, 55122 Mainz (DE)
(72) Erfinder: DICK, Erhard, 95701 Pechbrunn (DE); FUCHS, Roland, 95666 Mitterteich (DE); FISCHER, Erich, 95666 Mitterteich (DE); MÜNCH, Wolfgang, 55270 Bubenheim (DE); WINKELMANN, Anton, 55270 Ober-Olm (DE); RÜHL, Robert, 55130 Mainz (DE)
(74) Vertreter: Dr. Weitzel & Partner
(86) Internationale Anmeldenummer: PCT/EP2001/009363
(87) Internationale Veröffentlichungsnummer: WO 2002/028788

(56) Entgegenhaltungen:
- DE-A- 2 112 692
- DE-A- 3 516 920
- PATENT ABSTRACTS OF JAPAN vol. 016, no. 548 (C-1005), 18. November 1992 (1992-11-18) & JP 04 209722 A (NIPPON ELECTRIC GLASS CO LTD), 31. Juli 1992 (1992-07-31)
- PATENT ABSTRACTS OF JAPAN vol. 1998, no. 04, 31. März 1998 (1998-03-31) & JP 09 328324 A (NIPPON ELECTRIC GLASS CO LTD), 22. Dezember 1997 (1997-12-22)
- PATENT ABSTRACTS OF JAPAN vol. 2000, no. 02, 29. Februar 2000 (2000-02-29) & JP 11 322350 A (NIPPON ELECTRIC GLASS CO LTD), 24. November 1999 (1999-11-24)

## Beschreibung

Die Erfindung betrifft eine Vorrichtung zum Herstellen eines Glasstranges nach dem sogenannten Danner-Verfahren, insbesondere zum Herstellen eines Glasrohres. Vorrichtungen der genannten Art sind aus einer Vielzahl von Veröffentlichungen bekannt. Nur beispielshalber wird verwiesen auf DE 199 60 211 A1.

Eine solche Vorrichtung umfaßt ein Rohr, die sogenannte Danner-Pfeife, das langsam umläuft und das sich im allgemeinen innerhalb einer Heizmuffel befindet. Im allgemeinen ist die Danner-Pfeife konisch und mit ihrer Längsachse leicht gegen die Horizontale geneigt. Auf das eine Ende der Pfeife - bei konischen Pfeifen auf das größere Ende - wird ein kontinuierlicher Strom einer Glasschmelze aufgebracht, der einen laminaren Rieseifilm auf der Mantelfläche der Pfeife bildet. Am kleineren Ende der Pfeife wird der Glasstrang abgezogen, und zwar entweder als Vollmaterial oder als Rohr. Nach dem Umlenken in die Horizontale durchläuft der erstarrende Strang eine Rollenbahn bis zu einer nachgeschalteten Ziehmaschine. Sodann erfolgt eine Zerlegung in Abschnitte bestimmter Länge.

Der Glasstrom hat bei seinem Auftreffen auf das Aufgabeende der Danner-Pfeife eine Temperatur von etwa 1300° C und an der sogenannten Ziehzwiebel eine Temperatur von etwa 1000° C. Es findet somit ein Abkühlprozeß vom Aufgabeende zum Abgabeende statt. Der Abkühlprozeß verläuft durch die Zufuhr von Wärme von der Heizmuffel in kontrollierter Weise.

DE 198 03 327 C2 enthält Hinweise auf eine Rohrzuganlage nach Danner für Glasrohre. Die Anlage umfaßt ein Träger-Bauteil aus Keramik mit Metallüberzug.

DE 21 12 692 A1 beschreibt einen Auflaufkörper für die Herstellung von Rohren oder Stäben aus Glas. Hierbei sitzt ein Hohlkörper auf einer Spindel. Er ist mit dieser an einem Ende fest und am anderen Ende federnd verschiebbar verbunden.

Die Erfindung geht aus von einer Vorrichtung mit einer Danner-Pfeife der genannten Art, die in besondere Weise aufgebaut ist. Ihre Umfangswand ist aus einer äußeren Metallhülse sowie aus einem von der Metallhülse umgebenen Keramikkörper gebildet. Die Metallhülse besteht meist aus Edelstahl.

Die Wärmeausdehnungskoeffizienten der beiden Materialien sind bekannt höchst unterschiedlich. Der Koeffizient des Metalls ist bekanntlich wesentlich größer, als jener des keramischen Materials. Da die Temperatur der Schmelze und damit auch der Pfeife von Fall zu Fall unterschiedlich sind, führen die unterschiedlichen Wärmeausdehnungskoeffizienten der beiden Materialien zu Problemen der Formstabilität. Dies ist nachteilig sowohl für die Qualität des Erzeugnisses, als auch für die Lebensdauer der gesamten Vorrichtung.

Der Erfindung liegt die Aufgabe zugrunde, eine Vorrichtung der genannten Art derart zu gestalten, daß die genannten Probleme, die auf unterschiedliche Wärmeausdehnungskoeffizienten der beteiligten Materialien zurückgehen, vermieden werden. Gleichzeitig soll die Vorrichtung einfach im Aufbau und kostengünstig in der Herstellung sein.

Diese Aufgabe wird durch die Merkmale von Anspruch 1 gelöst.

Erfindungsgemäße Vorrichtungen lassen sich erfolgreich insbesondere bei der Glasrohrherstellung einsetzen, und zwar für jede Art von Glasrohen, beispielsweise Braunglasrohren. Die Vorrichtung erlaubt eine Relativverschiebung des Keramikkörpers und der Metallhülse in axialer Richtung. Es steht somit ein Verschiebeweg zur Verfügung, der Ausdehnungsunterschiede aufzunehmen vermag.

Die Erfindung ist anhand der Zeichnungen erläutert. Darin ist im einzelnen folgendes dargestellt:
- Figur 1: veranschaulicht das Grundprinzip einer Vorrichtung der genannten Art in schematischer Darstellung.
- Figur 2: zeigt in einer teilweise geschnittenen Aufrißansicht und in vergrößertem Maßstab die eigentliche Danner-Pfeife.

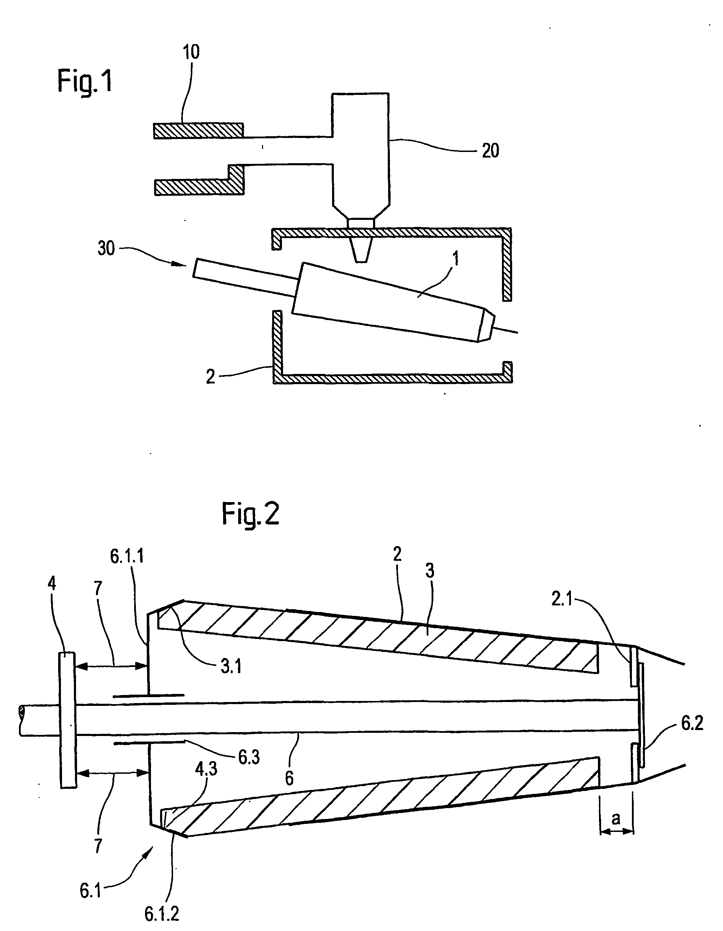

Die in Figur 1 gezeigte Vorrichtung dient allein der Formgebung. Es schließen sich die üblichen, nicht dargestellten Bauteile an, nämlich Ziehkanal mit Ziehbahn und Ziehmaschine mit Abtrennvorrichtung.

Die in Figur 1 gezeigte Vorrichtung umfaßt einen Verteiler 10 und einen Tiegel 20. Aus dem Tiegel tritt durch eine Düse das geschmolzene Glas als kontinuierlicher Strahl aus und trifft auf das Zielwerkzeug, nämlich die geneigte rotierende Pfeife 1. Die Pfeife 1 und der Auslauf aus der Düse befinden sich in einem Ofen 2, der einen Temperaturgradienten zwischen dem Auslauf aus der Düse und dem zweiten Ende gewährleistet. Eine Blasvorrichtung 30 dient der Beaufschlagung des Innenraumes des abzuziehenden Glasrohres mit Überdruck gegenüber dem Umgebungsdruck. Das Glas wird von der Pfeife abgezogen und - hier nicht dargestellt - in die Horizontale umgelenkt.

Die in Figur 2 gezeigte Pfeife 1 ist wie folgt aufgebaut:
Sie weist eine Umfangswand auf, umfassend eine äußere Metallhülse 2 sowie einen Keramikkörper 3. Sie umfaßt ferner eine Welle 6 mit Spanntellern 6.1, 6.2.

Wie man sieht, sind sowohl die Metallhülse 2 als auch der Keramikkörper 3 von konischer Gestalt. Dabei ist das größere Ende des Konus das Aufgabeende - somit im Bereich des Spanntellers 6.1 -, während das kleinere Ende das Abgabeende ist - somit im Bereich des Spanntellers 6.2. Der Keramikkörper 3 hat über die gesamte Länge eine konstante Wandstärke. Dies muß jedoch nicht so sein. Die Wandstärke könnte auch zum kleinen Ende hin zu- oder abnehmen.

Spannteller 6.2 ist eine kreisförmige Scheibe. Im Bereich des Abgabeendes ist die Metallhülse 2 unter einem gewissen Winkel gegen die Längsachse der Danner-Pfeife hin abgekröpft, und zwar im Sinne einer sich verstärkenden Konizität.

Spannteller 6.1 am aufgabeseitigen Ende ist von besonderer Gestalt: Wie man sieht, umfaßt er eine ebene Scheibe 6.1.1 sowie einen abgekröpften Teil 6.1.2. Teil 6.1.2 erweitert sich gegen das Abgabeende hin. Der Keramikkörper 3 ist hier angefast, und zwar derart, daß eine Anlagefläche 3.1 gebildet ist. Der abgekröpfte Teil 6.1.2 des Spanntellers 6.1 weist auf seiner Innenseite eine zur Anlagefläche 3.1 komplementäre Gegenfläche 4.3 auf. Die beiden Flächen 3.1 und 4.3 sind unter ein und demselben Winkel gegen die Längsachse der Danner-Pfeife geneigt. Sie bilden somit einen Sitz miteinander.

Die Hülse 2 weist am abgabeseitigen Ende einen Kragen 2.1 auf. Dieser liegt an dem Spannteller 6.2 an, und zwar entweder mittelbar oder unmittelbar. Welle 6 und Spannteller 6.2 sind drehfest miteinander verbunden, so daß über die Welle 6 ein Drehmoment in die Bauteile der Danner-Pfeife eingeleitet werden kann.

Die Welle 6 ist durch den Spannteller 6.1 am Aufgabeende hindurchgeführt, beispielsweise unter Zwischenfügung eines Gleitlagers 6.3, so daß zwischen Welle 6 und Spannhülse 6.1 eine Axialverschiebung stattfinden kann.

Im vorliegenden Falle wirkt eine elastische Kraft F in Richtung der Pfeile auf den aufgabeseitigen Spannteller 6.1, und zwar mittels Druckfedern 7, die sich gegen eine Druckplatte 4 abstützten.

Aufgrund dieser Konfiguration steht bei einer Ausdehnung aufgrund einer Temperaturerhöhung ein Verschiebeweg a zur Verfügung - siehe den Bereich des abgabeseitigen Spanntellers 6.2. Voraussetzung hierfür ist, daß sich die Metallhülse 2 nicht über die Keramikhülse 3 auf deren gesamter Länge erstreckt. Vielmehr muß das aufgabeseitige Ende der Metallhülse 2 einen gewissen Abstand zu dem abgekröpften Teil 6.1.2 des Spanntellers 6.1 haben.

Die Welle 6 ist am aufgabeseitigen Ende fliegend gelagert, was hier nicht näher dargestellt ist. An dieser Stelle wird ein Drehmoment eingeleitet.

## Patentansprüche

1. Vorrichtung zum Herstellen eines Glasstranges, insbesondere eines Glasrohres, umfassend die folgenden Merkmale:
1.1 eine Danner-Pfeife (1);
1.2 eine Düse zum Aufbringen eines Glasstromes auf die Mantelfläche der Danner-Pfeife (1), an deren Aufgabeende bei relativ hoher Temperatur zwecks Bildens eines Glasfilmes, der am Abgabeende als Zwiebel bei relativer niedriger Geschwindigkeit abgenommen wird;
1.3 die Danner-Pfeife (1) ist wie folgt aufgebaut:
1.3.1 ihre Umfangswand ist aus einer äußeren Metallhülse (2) sowie aus einem von dieser umgebenen Keramikkörper (3) gebildet;
1.3.2 am Aufgabeende und am Abgabeende ist jeweils ein Spannteller (6.1, 6.2) vorgesehen;
1.3.3 der abgabeseitige Spannteller (6.2) ist mit einer Welle (6) fest verbunden;
1.3.4 der aufgabeseitige Spannteller (6.1) ist auf der Welle (6) axial verschiebbar;
1.3.5 das aufgabeseitige Ende der Welle (6) ist mit einer Druckplatte (4) gegen Verschiebung in axialer Richtung fest verbunden;
1.3.6 zwischen der Druckplatte (4) und dem aufgabeseitigen Spannteller (6.1) ist eine Druckfeder (7) geschaltet, die die Druckplatte (4) und den aufgabeseitigen Spannteller (6.1) auseinanderzudrücken versucht;
1.3.7 der abgabeseitige Spannteller (6.2) greift am abgabeseitigen Ende der Hülse (2) an;
1.3.8 die Metallhülse (2) erstreckt sich vom Abgabe ende nur über einem Teil der Länge des Keramikkörpers.

2. Vorrichtung nach Anspruch 1, **dadurch gekennzeichnet, daß** die Metallhülse (2) an ihrem abgabeseitigen Ende einen Kragen (2.1) aufweist, gegen den sich der abgabeseitige Spannteller (6.2) abstützt.

3. Vorrichtung nach Anspruch 1 oder 2, **dadurch gekennzeichnet, daß** die Metallhülse (2) konisch ist, und daß das große Ende des Konus das Aufgabeende, und das kleine Ende des Konus das Abgabeende ist.

4. Vorrichtung nach einem der Ansprüche 1 bis 3, **dadurch gekennzeichnet, daß** die Danner-Pfeife (1) unter einem Winkel gegen die Horizontale geneigt ist.

## Claims

1. An apparatus for producing a glass strand, especially a glass tube, comprising the following features:
1.1 a Danner blowpipe (1);
1.2 a nozzle for applying a stream of glass onto the jacket surface of the Danner blowpipe (1) at its feed end at relatively high temperature for forming a glass film which is taken off at the delivery end as a bulb at a relatively low speed;
1.3 the Danner blowpipe (1) is configured as follows:
1.3.1 its circumferential wall is formed from an outer metal sleeve (2) and from a ceramic body (3) enclosing the same;
1.3.2 a tensioning plate (6.1, 6.2) each is provided at the feed end and the delivery end;
1.3.3 the tensioning plate (6.2) at the delivery end is rigidly connected with a shaft (6);
1.3.4 the tensioning plate (6.1) at the feed end is axial displaceable on the shaft (6);
1.3.5 the end of the shaft (6) at the feed end is rigidly connected with a pressure plate (4) against displacement in the axial direction;
1.3.6 a pressure spring (7) is disposed between the pressure plate (4) and the tensioning plate (6.1) at the feed end, which spring tries to press apart the pressure plate (4) and the tensioning plate (6.1) at the feed side;
1.3.7 the tensioning plate (6.2) at the delivery side engages on the delivery-side end of the sleeve (2);
1.3.8 the metal sleeve (2) extends from the delivery end only over a part of the length of the ceramic body.

2. An apparatus according to claim 1, **characterized in that** the metal sleeve (2) comprises a collar (2.1) at its end on the delivery side, on which collar rests the tensioning plate (6.2) at the delivery end.

3. An apparatus according to claim 1 or 2, **characterized in that** the metal sleeve (2) is conical and that the large end of the cone is the feed end and the small end of the cone is the delivery end.

4. An apparatus according to one of the claims 1 to 3, **characterized in that** the Danner blowpipe (1) is inclined under an angle relative to the horizontal.

## Revendications

1. Dispositif pour la fabrication d'une coulée de verre, en particulier d'un tube en verre, comprenant des éléments suivants :
1.1 un mandrin Danner (1);
1.2 une buse destinée à amener un flux de gaz sur la surface d'enveloppe du mandrin Danner (1) à l'extrémité d'arrivée de celui-ci, à une température relativement élevée, pour former une pellicule de verre qui est retirée à l'extrémité de retrait sous la forme d'une ampoule à une vitesse relativement basse ;
1.3 le mandrin Danner (1) étant construit de la manière suivante :
1.3.1 sa paroi de circonférence est faite d'un manchon métallique extérieur (2) et d'un élément en céramique (3) entouré par celui-ci ;
1.3.2 il est prévu un disque de serrage (6.1, 6.2) à chacune des extrémités d'arrivée et de retrait ;
1.3.3 le disque de serrage du côté du retrait (6.2) est fixé à demeure sur un arbre (6) ;
1.3.4 le disque de serrage du côté d'arrivée (6.1) est mobile dans le sens axial sur l'arbre (6) ;
1.3.5 l'extrémité de l'arbre (6) située du côté d'arrivée est reliée de manière fixe avec une plaque d'appui (4) qui empêche une translation dans le sens axial ;
1.3.6 il est prévu entre la plaque d'appui (4) et le disque de serrage du côté d'arrivée (6.1) un ressort de compression (7) qui tend à écarter la plaque de compression (4) du disque de serrage du côté d'arrivée (6.1) ;
1.3.7 le disque de serrage du côté du retrait (6.2) se met en prise sur l'extrémité du manchon (2) situé du côté du retrait ;
1.3.8 le manchon métallique (2) s'étend à partir de l'extrémité de retrait sur une partie seulement de la longueur de l'élément en céramique.

2. Dispositif selon la revendication 1, **caractérisé en ce que** le manchon métallique (2) présente à son extrémité située du côté du retrait un collet (2.1) contre lequel s'appuie le disque de serrage du côté du retrait (6.2).

3. Dispositif selon la revendication 1 ou 2, **caractérisé en ce que** le manchon métallique (2) est conique, et la grande extrémité du cône est l'extrémité d'arrivée et la petite extrémité du cône l'extrémité de retrait.

4. Dispositif selon l'une quelconque des revendications 1 à 3, **caractérisé en ce que** le mandrin Danner (1) est incliné par rapport à l'horizontale selon un certain angle.
